(19) Europäisches Patentamt
European Patent Office
Office européen des brevets

(11) **EP 0 844 905 B1**

## (12) EUROPÄISCHE PATENTSCHRIFT

(45) Veröffentlichungstag und Bekanntmachung des Hinweises auf die Patenterteilung:
**01.03.2000 Patentblatt 2000/09**

(51) Int Cl.[7]: **B01D 53/14**

(21) Anmeldenummer: **96937163.2**

(22) Anmeldetag: **06.08.1996**

(86) Internationale Anmeldenummer:
**PCT/DE96/01507**

(87) Internationale Veröffentlichungsnummer:
**WO 97/05943 (20.02.1997 Gazette 1997/09)**

(54) **VERFAHREN ZUR KOHLENDIOXIDABREINIGUNG AUS GASGEMISCHEN**

PROCESS FOR REMOVING CARBON DIOXIDE FROM GAS MIXTURES

PROCEDE D'ELIMINATION DU DIOXYDE DE CARBONE CONTENU DANS DES MELANGES GAZEUX

(84) Benannte Vertragsstaaten:
**AT CH DE DK FR GB IT LI NL SE**

(30) Priorität: **09.08.1995 DE 19529246**

(43) Veröffentlichungstag der Anmeldung:
**03.06.1998 Patentblatt 1998/23**

(73) Patentinhaber: **Weimer, Thomas**
**71067 Sindelfingen (DE)**

(72) Erfinder: **Weimer, Thomas**
**71067 Sindelfingen (DE)**

(74) Vertreter: **Hössle, Markus, Dipl.-Phys.**
**Hössle & Kudlek**
**Patentanwälte**
**Moserstrasse 8**
**70182 Stuttgart (DE)**

(56) Entgegenhaltungen:
**US-A- 2 955 910**   **US-A- 3 519 488**
**US-A- 4 063 899**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Kohlendioxidabreinigung aus Kohlendioxid enthaltenden Gasgemischen.

Die Entfernung von Kohlendioxid ($CO_2$) aus Gasgemischen ist ein wichtiger verfahrenstechnischer Prozeß. Zur $CO_2$-Abreinigung aus Gasgemischen stehen verschiedene bekannte Verfahren zur Vefügung. Diese lassen sich in Absorptionsverfahren, Adsorptionsverfahen, Membranverfahren und chemische Abreaktionen unterteilen.

Zur Absorption von $CO_2$ werden aufgrund der langsamen Kinetik der chemischen Reaktion des $CO_2$ in der Flüssigkeit bzw. der langsamen Diffusionsgeschwindigkeit des $CO_2$ in wässrigen Lösungen gepackte Absorberkolonnen verwendet. Bei diesen Absorberkolonnen steht, im Gegensatz zu Sprühwäschern, eine große Phasengrenzfläche zwischen Gas und Flüssigkeit zur Verfügung. Als Waschlösungen werden Lösungen verwendet, deren $CO_2$-Gleichgewichtspartialdruck geringer ist als der tolerierbare Partialdruck des $CO_2$ nach der $CO_2$-Abreinigung.

Es existieren mehrere gebräuchliche Absorptionsverfahren zur $CO_2$-Entfernung aus Gasgemischen. Ein bekanntes physikalisches Absorptionsverfahren ist die Druckwasserwäsche. Die Absorption des $CO_2$ in Wasser erfolgt unter Überdruck, die Regeneration der Waschlösung in einer Desorptionskolonne unter atmosphärischem Druck (vgl. US-PS 4 576 615).

Bei Wäschen mit Methanol als Waschflüssigkeit wird die physikalische Absorption bei tiefen Temperaturen durchgerührt. Die Regeneration des Methanols kann mit einem aus der US-PS 4 897 091 bekannten Membranprozeß oder durch Temperaturerhöhung in der Desorptionskolonne (sogenannter Rectisolprozeß) erfolgen. Bei chemischen Wäschen wird das Dissoziationsgleichgewicht der Kohlensäure durch Reaktionen beeinflußt. Durch Reaktion von Dissozationsprodukten findet eine Verringerung des freien gelösten Kohlendioxids in der Lösung statt, woraus eine Beschleunigung des $CO_2$-Stofftransports aufgrund größerer Konzentrationsgradienten in der Lösung resultiert. Bekannte Absoptionsverfahren mit chemischen Reaktionen des $CO_2$ in der Flüssigkeit und mit thermischer Regeneration sind die in der DE-A 86 77 28 beschriebene Pottaschewäsche mit $K_2CO_3$-Lösungen oder auch mit $Na_2CO_3$-Lösungen, sowie die Wäsche des Gasgemisches mit Alkanolaminlösungen (WO-A 8 502 555, US-PS 5 061 465, US-PS 4 869 884). Zudem sind auch Wäschen des Gasgemisches mit NaOH- oder KOH-Lösungen mit elektrolytischer Regeneration der Waschlösung bekannt (vgl. US-PS 4 041 129).

Aus der DE-A 86 77 28 ist als weitere Möglichkeit zur Regeneration von NaOH-Waschlösungen neben der Elektrolyse die Kaustizierung der entstandenen $Na_2CO_3$-Lösung zu Natronlauge bei 70-80 Grad Celsius bekannt, analog zu dem gleichen Prozeßschritt in der Sodaindustrie (sogenanntes Solvayverfahren):

$$Na_2CO_3 + Ca(OH)_2 \rightarrow 2NaOH + CaCO_3$$

Eine weitere bekannte Möglichkeit ist die direkte Verwendung von Erdalkalihydroxidsuspensionen für die Absorption mit thermischer Zersetzung der ausgefällten Erdalkalicarbonate (EP-A 0 487 102). Des weiteren sind neben den Absorptionsverfahren die Verfahren der Temperaturwechseladsorption TWA (DE-A 20 64 137), der Druckwechseladsorption DWA (US-PS 4 813 980) sowie das sogenannte Membranverfahren (Coady et. al., CEP Oktober 1982, S. 44 ff.) bekannt.

Für die $CO_2$-Feinreinigung von Gasgemischen werden von den beschriebenen Verfahren nur die Wäsche mit KOH- bzw. NaOH-Lösungen und TWA-Verfahren verwendet. Bei thermisch regenerierbaren Absorptionslösungen, Membranprozessen und DWA-Prozessen müßte für eine Feinreinigung eine sehr große Druckerhöhung des Gasgemisches aufgewendet werden, um eine nahezu vollständige Abreinigung des Gasgemisches zu erreichen. Dies ist energetisch und konstruktiv sehr aufwendig.

Weitere mögliche Verfahren für die $CO_2$-Feinreinigung sind die Absorption in Erdalkalihydroxidsuspensionen und die katalytische Methanisierung des Kohlendioxids mit Wasserstoff. Folgende Verfahren zur $CO_2$-Feinreinigung von Gasgemischen sind in der industriellen Verwendung:

- Katalytische Methanisierung des $CO_2$ mit Wasserstoff. Diese wird beispielsweise zur $CO_2$-Feinreinigung nach einer Druckwasserabsorption zur $CO_2$-Entfemung aus dem Synthesegas bei der Ammoniakherstellung verwendet. Es werden vier Mol Wasserstoff pro Mol $CO_2$ benötigt, da zusätzlich der entstehende Sauerstoff in Wassermolekülen gebunden wird. Die Ammoniakausbeute sinkt entsprechend.

- Absorption des $CO_2$ in Kali- oder Natronlauge. Die einfache aber teure Entsorgung der entstehenden Carbonatlösung wird hauptsächlich im Laborbetrieb verwendet. Zur Regeneration kann die elektrolytische Aufarheitung oder eine Kaustizierung der Carbonatlösung bei 70-80 Grad Celsius durchgeführt werden.

- Temperaturwechseladsorption (TWA) an Zeolithen. Die Luft muß vorher getrocknet werden. Dieses Verfahren wird für die Aufbereitung der Luft vor der Tieftemperaturzerlegung oder vor der Erzeugung sehr kalter Luft, beispielsweise im europäischen Windkanal in Köln, eingesetzt.

Die bekannten Verfahren zur $CO_2$-Feinreinigung haben einen sehr hohen $CO_2$-spezifischen Energiebedarf (bei der Methanisierung in Form von Wasserstoffverbrauch). Bei der TWA muß zudem vorher der Wasserdampf aus dem Gasgemisch entfernt werden. Die Absorptionsverfahren mit Regeneration durch Elektrolyse oder Kaustifizieren einer Sodalösung haben als entscheidenden Nachteil den sogenannten Batch-Betrieb des Absorbers. Für die Elektrolyse wie auch für die Kaustizierung der Carbonatlösung muß die Kolonne für den ungünstigsten Betriebspunkt der reinen Carbonatlösung ausgelegt werden und ist beim Betrieb mit hoher OH⁻-Ionenkonzentration überdimensioniert. Zudem ist die exakte Vorherbestimmung des Abscheidegrades bei sehr geringen Hydoxilionenkonzentrationen nur ungenau möglich. Es wird daher auf jeden Fall eine sehr hohe Kolonne mit hohen Investitionskosten und einem hohem Druckabfall der Gasströmung, welcher wiederum hohe Energiekosten verursacht, verwendet werden müssen. Erdalkalihydroxidsuspensionen als Absorptionslösung werden wegen Problemen aufgrund der großen Menge an Ablagerungen in der Absorberkolonne nicht verwendet. Aus diesem Grunde werden in der industriellen Praxis zur $CO_2$-Feinreinigung zumeist TWA-Verfahren oder die Methanisierung des $CO_2$ aufgrund geringerer Kosten und höherer Zuverlässigkeit eingesetzt.

Aus der US-PS 4 063 899 ist ein Verfahren zur Absorption von Kohlendioxid aus Gasgemischen bekannt, wobei das $CO_2$ enthaltende Gasgemisch durch einen Natronkalk enthaltenen Filter geleitet wird und zur Verbesserung des Wirkungsgrades und zur Vermeidung einer Austrocknung des Filters ein über Übertragungselemente mit dem Filter in Verbindung stehender Wassertank vorgesehen ist.

Ausgehend hiervon liegt der vorliegenden Erfindung die Aufgabe zugrunde, ein Verfahren zur Kohlendioxidabreinigung aus Kohlendioxid enthaltenden Gasgemischen bereitzustellen, welches sowohl eine Absorption von $CO_2$ als auch eine Regeneration der Waschlösung bei geringem Energieverbrauch gestattet und welches kostengünstig, insbesondere im Hinblick auf Einsatzstoffe und Apparaturen, betrieben werden kann.

Zur Lösung dieser Aufgabe wird ein Verfahren mit den Merkmalen des Hauptanspruchs vorgeschlagen. Demnach wird Kohlendioxid aus einem Kohlendioxid enthaltenden Gasgemisch unter Verwendung einer Hydroxilionen enthaltenden alkalischen Waschlösung bei Bildung von Carbonationen absorbiert. Die Regeneration der Waschlösung erfolgt durch Ausfällen von Carbonat in alkalischer Lösung mittels Zugabe von Oxiden oder Hydroxiden, wobei deren Zugabe vor einer vollständigen Umwandlung der Hydroxilionen in Carbonationen und in einem derartigen Maße erfolgt, daß die Hydroxilionenkonzentration größer als $10^{-1}$ Mol/l ist. Des weiteren erfolgt die Regeneration der Waschlösung nicht erst zu einem Zeitpunkt, bei dem die waschaktiven Hydroxilionen aufgebraucht sind, sondern schon vor einer vollständigen Umwandlung der Hydroxilionen in Carbonationen. Die Zugabe von Oxiden oder Hydroxiden zur Regeneration der Waschlösung erfolgt dabei in einem Maße, daß die Hydroxilionenkonzentration in der Waschlösung größer als $10^{-1}$ Mol/Liter ist. Erfindungsgemäß wird somit ein Verfahren zur Kohlendioxidabreinigung bereitgestellt, dessen Hydroxilionen enthaltende Waschlösung kontinuierlich regenerierbar ist. Dadurch wird eine Absorption von Kohlendioxid in relativ kleinen bzw. niedrigen Absorberkolonnen mit hohen OH⁻-Konzentrationen ermöglicht, wodurch sich die anlagenbedingten Kosten reduzieren. Es können somit wesentlich geringere Packungsschütthöhen in der Absorptionskolonne als bei den Absoptionsverfahren mit elektrolytischer Aufbereitung oder mit Kaustifizierung reiner Sodalösung realisiert werden. Das erfindungsgemäße Verfahren verfügt gegenüber thermisch regenerierbaren Absorptionslösungen, Membranprozessen und TWA-Prozessen, bei denen für eine Feinreinigung eine immense Druckerhöhung des Gasgemisches aufgewendet werden müßte, über einen wesentlich geringeren Druckverlust der Gasströmung und einen stark verringerten Energiebedarf.

Vorteilhafte Ausgestaltungen des erfindungsgemäßen Verfahrens sind in den sich anschließenden Unteransprüchen 2 bis 18 beschrieben.

Nach Anspruch 2 erfolgt die Zugabe von Oxiden oder Hydroxiden vorteilhafter Weise unterstöchiometrisch, das heißt in geringeren Mengen, als die vorhandenen Carbonationen.

Bei einer Verwendung des erfindungsgemäßen Verfahrens in einer in einen Waschlösungskreislauf eingebundenen Absorberkolonne wird vorteilhafterweise gemäß den Unteransprüchen 4 bzw. 5 ein Teil der Waschlösung dem Waschlösungskreislauf zur Regeneration entnommen und anschließend wieder dem Waschlösungskreislauf zugeführt, wobei die ausgefällten Carbonate abfiltriert werden.

Bei einer Regeneration der Waschlösung direkt im Absorbersumpf gemäß Anspruch 6 werden vorteilhafterweise die Feststoffe aus dem Absorbersumpf durch einen Filter oder ein Hydrozyklon aus der Waschlösung abgeschieden. In besonders vorteilhafter Ausgestaltung gemäß Anspruch 8 sind die in den Absorbersumpf zur Regeneration der Waschlösung zugegebenen Oxide oder Hydroxide mittels mindestens einer flüssigkeitsdurchlässigen Membran von der Zirkulation der Waschlösung getrennt.

Das erfindungsgemäße Verfahren wird für eine besonders kostengünstige Durchführung mit Calciumoxid zur Regeneration der Waschlösung durchgeführt.

Zur Erzielung eines möglichst guten Wirkungsgrades werden die gefällten Carbonate erfindungsgemäß zur Rückgewinnung von anhaftender Lauge nochmals mit Wasser gespült, welches dann zur Ersetzung der Verdunstungsverluste der Waschlösung verwendet wird.

Zur Erzielung bestmöglicher Absorptionsergebnisse wird vorteilhafterweise KOH in wässriger Lösung als Waschlösung verwendet.

Durch den Einsatz geordneter Gewebepackungen gemäß Unteranspruch 15 in der Absorberkolonne wird die Absorptionsleistung weiter verbessert.

Das neue Verfahren hat somit einen wesentlich geringeren Druckverlust der Gasströmung und einen stark verringerten Energiebedarf sowie einen geringeren Investitionsbedarf für die Absorption zur Folge. Eine Wärmezufuhr für die Regeneration der Waschlösung ist erfindungsgemäß nicht notwendig, vielmehr findet bei der $CO_2$-Feinreinigung nur ein $CO_2$-äquivalenter Verbrauch an kostengünstigen Grundchemikalien (wie beispielsweise gebranntem Kalk gemäß Unteranspruch 10) statt.

Vorteilhafterweise wird durch eine thermische Zersetzung der durch das erfindungsgemäße Verfahren erhaltenen Carbonate reines Kohlendioxid zurückgewonnen und das beim thermischen Zersetzen erhaltene Oxid wird vorteilhafterweise zur Regeneration der Waschlösung verwendet. Somit wird das erfindungsgemäße Verfahren zu einer $CO_2$-Gewinnung aus Gasgemischen mit geringem $CO_2$-Anteil erweitert.

Die Erfindung ist anhand eines Ausführungsbeispieles in der Zeichnung dargestellt und wird im folgenden unter Bezugnahme auf die Zeichnung näher erläutert.

Figur 1      zeigt ein Grundfließbild eines erfindungsgemäßen Verfahrens zur Kohlendioxidabreinigung aus Gasgemischen.

Figur 2      zeigt das Grundfließbild der Figur 1 mit einer Erweiterung zur $CO_2$-Rückgewinnung.

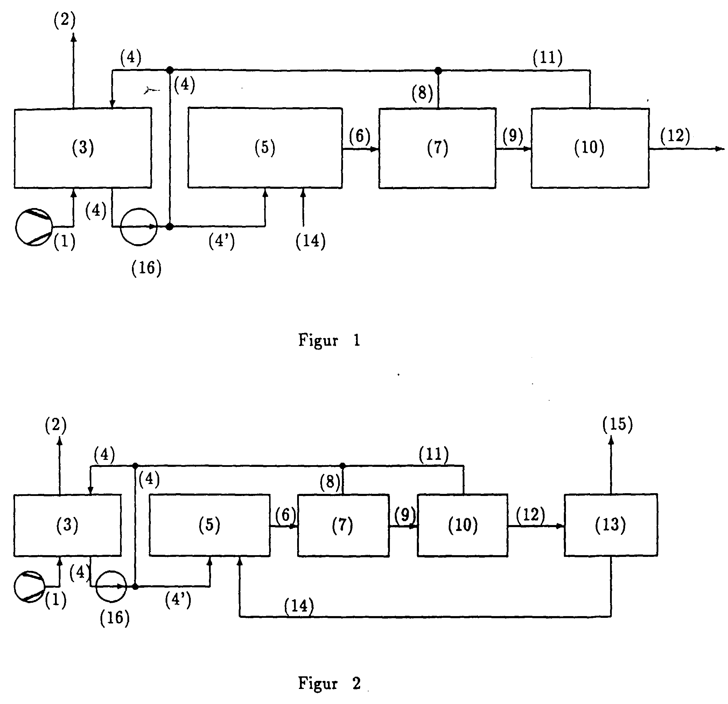

Figur 1 zeigt ein erfindungsgemäßes Verfahren zur Entfernung von $CO_2$ aus einem kohlendioxidhaltigen Rohgas 1, das durch eine Absorberkolonne 3 mit nicht näher dargestellten Einbauten zur Verbesserung der Stoffübertragung geführt wird. Durch die Absorberkolonne 3 wird ebenfalls eine von oben nach unten durch die Absorberkolonne 3 rinnende Waschlösung 4 geführt. Aufgrund der geringen $CO_2$-Stoffströme kann das Gas im Gegenstrom oder im Gleichstrom mit der Waschlösung 4 geführt werden. Der aus der Absorberkolonne 3 austretende Gasstrom 2 ist abhängig von der Gasgeschwindigkeit, Kolonnenhöhe, Waschlösung und Einbauten nahezu kohlendioxidfrei. Die Waschlösung 4 enthält erfindungsgemäß Hydroxilionen, wobei die Verwendung einer $KOH/K_2CO_3$- oder $NaOH/Na_2CO_3$-Lösung möglich ist.

In dem in Figur 1 dargestellten Ausführungsbeispiel ist die Absorberkolonne 3 an einen Waschlösungskreislauf angeschlossen. Das Umwälzen der Waschlösung 4 erfolgt mittels einer Pumpe 16. Ein Teil 4' der Waschlösung 4 wird dem Waschlösungskreislauf entnommen und zur Regeneration einem Behältnis 5 zugeführt, in welchem der Waschlösung 4 mit nennenswerter $OH^-$-Konzentration Oxid- bzw. Hydroxidverbindungen 14 zugeführt werden, die eine Ausfällung von Carbonaten bewirken. Durch die Zugabe von Oxiden oder Hydroxiden gehen $OH^-$-Ionen wieder in Lösung und eine Waschlösung mit reduzierter $CO_3^{2-}$-Konzentration entsteht. Im Gegensatz zur Kaustizierung reiner Sodalösungen nach der Technologie des Solvayprozesses entsteht jedoch keine reine Lauge. Dies ist erfindungsgemäß für die Regeneration der Waschlösung nicht erforderlich, da die Absorptionsleistung neben den apparativen Randbedingungen (Kolonnenhöhe, Einbauten, Hydrodynamik) im wesentlichen durch die Konzentration der $OH^-$-Ionen bestimmt wird. Diese wird erfindungsgemäß größer als $10^{-1}$ Mol/l (entsprechend einem pH-Wert von 13 oder größer) gehalten. Die in der Lösung verbleibenden Carbonationen haben nur ein geringen Einfluß auf die $CO_2$-Abscheidung. Besonders geeignete Verbindungen zur Fällung von Carbonaten sind die Erdalkaliverbindungen $CaO$, $Ca(OH)_2$, $SrO$, $Sr(OH)_2$, $BaO$ und $Ba(OH)_2$.

Um eine vollständige Umwandlung der zugegebenen Verbindungen zu Carbonaten zu gewährleisten, wird eine unterstöchiometrische Zugabe der Oxid- bzw. Hydroxidverbindungen 14 gewählt. Die unterstöchiometrische Zugabe kann hierbei auch durch mehrmalige Verwendung des gleichen Feststoffes erreicht werden, bis keine Regeneration der Waschlösung 4 mehr eintritt.

Das Reaktionsprodukt 6 der Regenerierungsreaktion wird einer Filtrierung 7 zum Abfiltrieren von Carbonaten zugeführt. Die derart regenerierte Lauge 8 wird daraufhin wieder dem Waschlösungskreislauf zugeführt. Das Filtrat 9 wird bei Prozeßschritt 10 nochmals gespült, zentrifugiert und/oder getrocknet, so daß Carbonat als Feststoff 12 vorliegt. Die durch Prozeßschritt 10 erhaltene alkalische Flüssigkeit 11 wird ebenfalls dem Waschlösungskreislauf zugeführt.

Alternativ zu dem beschriebenen Verfahrensablauf können die Oxid- oder Hydroxidverbindungen 14 auch der Waschlösung 4 in dem Absorber 3 zugesetzt werden. Um einen Feststoffausfall in der Kolonne weitgehend zu verhindern, wird dann entweder ein Filter vor der Umwälzpumpe installiert, oder die zugesetzten Verbindungen 14 befinden sich in einem flüssigkeitsdurchlässigen Behältnis. Dadurch wird ein Zusetzen der Packungen in der Absorberkolonne 3 vermieden und ein beständig geringer Druckabfall der Gasströmung in der Absorberkolonne 3 wird gewährleistet.

Bei dem zusätzlichen Prozeßschritt 10 zur Minimierung der Laugenverluste nach der Filtrierung 7 stehen zwei Alternativen zur Verfügung:

- Verdunstet Wasser bei der Absoption durch nicht wasserdampfgestättigtes Rohgas 1, so wird das Filtrat 9 nochmals mit Wasser gespült, um die Lauge auszuwaschen. Dann wird beispielsweise durch eine Zentrifuge oder dergleichen ein Feststoff 12 mit einem Wassergehalt von ca. 10% produziert. Die abgeschiedene alkalische Flüssigkeit 11 wird zusammen mit der regenerierten Lauge 8 der Waschflüssigkeit 4 zugegeben.

- Bei wasserdampfgesättigtem Rohgas 1 wird nur der Flüssigkeitsgehalt des Feststoffes durch Zentrifugieren verringert. Auch hier wird ein Feststoff 12 mit einem Wassergehalt von ca. 10% erzeugt und die rückgewonnene Lauge 11 der Waschlösung 4 zugegeben.

Gemäß Figur 2 wird zur $CO_2$-Gewinnung aus Gasgemischen mit geringem $CO_2$-Anteil das abgeschiedene Carbonat in Form eines Feststoffes 12 in einem Prozeßschritt 13 thermisch zersetzt. Es entsteht reines $CO_2$-Gas 15 und ein Oxid 14, welches zur Regeneration verwendet wird. Ein besonders geeigneter Einsatzstoff für die Regeneration ist Calciumoxid.

**Patentansprüche**

1. Verfahren zur Kohlendioxidabreinigunug aus Kohlendioxid enthaltenden Gasgemischen (1) mit Absorption des Kohlendioxids in einer Hydroxilionen enthaltenden Waschlösung (4) unter Bildung von Carbonationen, bei dem zur Regeneration der Waschlösung (4) durch Ausfällen von Carbonat in alkalischer Lösung eine Zugabe von Oxiden oder Hydroxiden (14) erfolgt, wobei die Zugabe vor einer vollständigen Umwandlung der Hydroxilionen in Carbonationen und in einem Maße erfolgt, daß die Hydroxilionenkonzentration größer als $10^{-1}$ Mol/l ist.

2. Verfahren nach Anspruch 1, dadruch gekennzeichnet, daß die Zugabe von Oxiden oder Hydroxiden (14) unterstöchiometrisch erfolgt.

3. Verfahren nach Anspruch 2, dadurch gekennzeichnet, daß die unterstöchiometrische Zugabe durch mehrmalige Verwendung der zur Regeneration verwendeten Oxide oder Hydroxide (14) bis zu deren weitgehender Umwandlung in Carbonate erfolgt.

4. Verfahren nach einem der Ansprüche 1 bis 3, dadurch gekennzeichnet, daß die Absorption des Kohlendioxids in einem an einen Waschlösungskreislauf angeschlossenen und im Gegenstrom von Waschlösung (4) durchflossenen Absorber (3) erfolgt, wobei ein Teil der Waschlösung dem Waschlösungskreislauf zur Regeneration entnommen und anschließend wieder dem Waschlösungskreislauf zugeführt wird.

5. Verfahren nach Anspruch 4, dadurch gekennzeichnet, daß die ausgefällten Carbonate abfiltriert werden.

6. Verfahren nach einem der Ansprüche 1 bis 3, dadurch gekennzeichnet, daß die Regeneration der Waschlösung (4) durch Zugabe von Oxiden oder Hydroxiden (14) im Absorbersumpf durchgeführt wird.

7. Verfahren nach Anspruch 6, dadurch gekennzeichnet, daß die Feststoffe aus dem Absorbersumpf durch einen Filter oder ein Hydrozyklon aus der Waschlösung (14) abgeschieden werden.

8. Verfahren nach Anspruch 6, dadurch gekennzeichnet, daß die in den Absorbersumpf zugegebenen Oxide oder Hydroxide mittels mindestens einer flüssigkeitsdurchlässigen Membran von der Zirkulation der Waschlösung getrennt sind.

9. Verfahren nach einem der Ansprüche 1 bis 8, dadurch gekennzeichnet, daß die Regeneration der Waschlösung (4) durch Zugabe von Oxiden oder Hydroxiden (14) ohne Wärmezufuhr durchgeführt wird.

10. Verfahren nach einem der Ansprüche 1 bis 9, dadurch gekennzeichnet, daß zur Regeneration der Waschlösung Calciumoxid verwendet wird.

11. Verfahren nach einem der Ansprüche 1 bis 9, dadurch gekennzeichnet, daß zur Regeneration der Waschlösung (4) Calciumhydroxid verwendet wird.

12. Verfahren nach einem der Ansprüche 1 bis 11, dadurch gekennzeichnet, daß die gefällten Carbonate zur Rückgewinnung von anhaftender Lauge nochmals mit Wasser gespült werden, welches danach zur Ersetzung der Verdunstungsverluste der Waschlösung (4) verwendet wird.

13. Verfahren nach einem der Ansprüche 1 bis 12, dadurch gekennzeichnet, daß als Waschlösung (4) KOH in wässriger Lösung verwendet wird.

14. Verfahren nach einem der Anspüche 1 bis 13, dadurch gekennzeichnet, daß als Einbauten des Absorbers (3) geordnete Packungen verwendet werden.

15. Verfahren nach einem der Ansprüche 1 bis 14, dadurch gekennzeichnet, daß durch Zentrifugieren der Carbonate deren Restfeuchte verringert wird.

16. Verfahren nach einem der Ansprüche 1 bis 15, dadurch gekennzeichnet, daß durch thermische Zersetzung (13) der Carbonate reines Kohlendioxid (15) zurückgewonnen wird.

17. Verfahen nach Anspruch 16, dadurch gekennzeichnet, daß das beim thermischen Zersetzen (13) erhaltene Oxid (14) zur Regeneration der Waschlösung (4) verwendet wird.

**18.** Verfahren nach einem der Ansprüche 1 bis 17, dadurch gekennzeichnet, daß die Regeneration der Waschlösung (4) kontinuierlich erfolgt.

**Claims**

**1.** Method for drawing-off carbon dioxide from gas mixtures (1) containing carbon dioxide, comprising absorption of the carbon dioxide in a washing solution (4), containing hydroxyl ions under formation of carbonate ions, wherein an addition of oxides or hydroxides (14) takes place for regeneration of the washing solution (4) through precipitation of carbonate in alkaline solution, the addition taking place before a complete conversion of the hydroxyl ions into carbonate ions to such an extent that the hydroxyl ion concentration is greater than $10^{-1}$ mol/l.

**2.** Method according to claim 1, characterized in that the addition of oxides or hydroxides (14) takes place substoichiometrically.

**3.** Method according to claim 2, characterized in that the sub-stoichiometrical addition takes place by repeated use of the oxides and hydroxides (14) used for regeneration, until these are largely converted into carbonates.

**4.** Method according to any one of claims 1 to 3, characterized in that the absorption of the carbon dioxide takes place in an absorber (3) connected to the washing solution cycle and flowed-through in opposing flow by washing solution (4), wherein a part of the washing solution is extracted from the washing solution cycle for regeneration and subsequently redirected into the washing solution cycle.

**5.** Method according to claim 4, characterized in that the precipitated carbonates are filtered off.

**6.** Method according to any one of claims 1 to 3, characterized in that the regeneration of the washing solution (4) is effected by addition of oxides or hydroxides (14) into the absorber sump.

**7.** Method according to claim 6, characterized in that the solid matter from the absorber sump is separated from the washing solution (14) by a filter oder hydrocyclon.

**8.** Method according to claim 6, characterized in that the oxides or hydroxides added to the absorber sump are separated from the circulation of the washing solution by at least a liquid-permeable membrane.

**9.** Method according to any one of claims 1 to 8, characterized in that the regeneration of the washing solution (4) is effected by addition of oxides or hydroxides (14) without supply of heat.

**10.** Method according to any one of claims 1 to 9, characterized in that calcium oxide is used for regeneration of the washing solution.

**11.** Method according to any one of claims 1 to 9, characterized in that calcium hydroxide is used for regeneration of the washing solution (4).

**12.** Method according to any one claims 1 to 11, characterized in that the precipitated carbonates are again rinsed with water for recovery of adherent lye, the water then being used to replace the evaporation losses of the washing solution (4).

**13.** Method according to any one of claims 1 to 12, characterized in that KOH in aqueous solution is used as washing solution (4).

**14.** Method according to any one of claims 1 to 13, characterized in that ordered packages are used as built in elements of the absorber (3).

**15.** Method according to any one of claims 1 to 14, characterized in that the remaining humidity (rest-humidity) of the carbonates is decreased by centrifugation.

**16.** Method according to any one of claims 1 to 5, characterized in that pure carbon dioxide (15) is recovered by means of thermal decomposition (13) of the carbonates.

**17.** Method according to claim 16, characterized in that the oxide (14) obtained during thermal decomposition (13) is used for regeneration of the washing solution (4).

**18.** Method according to any one of claims 1 to 17, characterized in that the regeneration of the washing solution (4) is effected continuously.

**Revendications**

**1.** Procédé pour éliminer le dioxyde de carbone contenu dans des mélanges gazeux (1) contenant du dioxyde de carbone, par absorption du dioxyde de carbone par une solution de lavage (4) contenant des ions hydroxyle, avec formation d'ions carbonate, dans lequel, pour régénérer la solution de lavage (4) par précipitation du carbonate en solution alcaline, on procède à une addition d'oxydes ou d'hydroxydes (14), l'addition étant effectuée avant une conversion complète des ions hydroxyle en ions carbonate, et dans une mesure telle que la concentration des ions hydroxyle soit supérieure à $10^{-1}$ mol/l.

2. Procédé selon la revendication 1, caractérisé en ce que l'addition des oxydes ou hydroxydes (14) s'effectue dans des conditions sous-stoechiométriques.

3. Procédé selon la revendication 2, caractérisé en ce que l'addition sous-stoechiométrique est réalisée par utilisation multiple des oxydes ou hydroxydes (14) utilisés pour la régénération, jusqu'à ce que leur conversion en carbonates soit sensiblement complète.

4. Procédé selon l'une des revendications 1 à 3, caractérisé en ce que l'absorption du dioxyde de carbone est effectuée dans un absorbeur (3), qui communique avec un circuit de solution de lavage et est traversé à contre-courant par rapport à la solution de lavage (4), une partie de la solution de lavage étant soutirée du circuit de solution de lavage pour régénération, et étant ensuite réintroduite dans le circuit de solution de lavage.

5. Procédé selon la revendication 4, caractérisé en ce que les carbonates séparés par précipitation sont isolés par filtration.

6. Procédé selon l'une des revendications 1 à 3, caractérisé en ce que la régénération de la solution de lavage (4) est mise en oeuvre par addition d'oxydes ou d'hydroxydes (14) dans le fond de l'absorbeur.

7. Procédé selon la revendication 6, caractérisé en ce que les matières solides provenant du fond de l'absorbeur sont séparées de la solution de lavage (14) à l'aide d'un filtre ou d'un hydrocyclone.

8. Procédé selon la revendication 6, caractérisé en ce que les oxydes ou hydroxydes ajoutés au fond de l'absorbeur sont séparés de la circulation de la solution de lavage à l'aide d'au moins une membrane perméable aux liquides.

9. Procédé selon l'une des revendications 1 à 8, caractérisé en ce que la régénération de la solution de lavage (4) est mise en oeuvre par addition d'oxydes ou d'hydroxydes (14) sans apport de chaleur.

10. Procédé selon l'une des revendications 1 à 9, caractérisé en ce qu'on utilise de l'oxyde de calcium pour régénérer la solution de lavage.

11. Procédé selon l'une des revendications 1 à 9, caractérisé en ce qu'on utilise de l'hydroxyde de calcium pour régénérer la solution de lavage (4).

12. Procédé selon l'une des revendications 1 à 11, caractérisé en ce que les carbonates qui ont précipité sont, pour récupérer la lessive qui y adhère, encore une fois rincés avec de l'eau, qui va être ensuite utilisée pour remplacer les pertes de la solution de lavage (4) par évaporation.

13. Procédé selon l'une des revendications 1 à 12, caractérisé en ce qu'on utilise en tant que solution de lavage (4) une solution aqueuse de KOH.

14. Procédé selon l'une des revendications 1 à 13, caractérisé en ce qu'on utilise, en tant qu'éléments internes de l'absorbeur (3), des garnissages ordonnés.

15. Procédé selon l'une des revendications 1 à 14, caractérisé en ce qu'on diminue l'humidité relative des carbonates par centrifugation de ces derniers.

16. Procédé selon l'une des revendications 1 à 15, caractérisé en ce qu'on récupère du dioxyde de carbone pur (15) par décomposition thermique (13) des carbonates.

17. Procédé selon la revendication 16, caractérisé en ce que l'oxyde (14) obtenu lors de la décomposition thermique (13) est utilisé pour régénérer la solution de lavage (4).

18. Procédé selon l'une des revendications 1 à 17, caractérisé en ce que la régénération de la solution de lavage (4) s'effectue en continue.

Figur 1

Figur 2